# EUROPÄISCHE PATENTSCHRIFT

(11) **EP 3 593 169 B1**
(45) Veröffentlichungstag und Bekanntmachung des Hinweises auf die Patenterteilung: **14.10.2020**
(21) Anmeldenummer: 18716485.0
(22) Anmeldetag: 08.03.2018
(51) Int. Cl.: G01S 17/89, G01S 7/481, G01S 7/484, G01S 17/10, G01S 17/42

(54) **LIDAR-SYSTEM MIT FLEXIBLEN SCANPARAMETERN**
LIDAR SYSTEM WITH FLEXIBLE SCAN PARAMETERS
SYSTÈME LIDAR AYANT DES PARAMÈTRES DE BALAYAGE FLEXIBLES

(30) Priorität: 08.03.2017 DE 102017002235
(43) Veröffentlichungstag der Anmeldung: 15.01.2020
(73) Patentinhaber: Blickfeld GmbH, 80339 München (DE)
(72) Erfinder: PETIT, Florian, 81247 München (DE)
(74) Vertreter: Kraus & Weisert Patentanwälte PartGmbB
(86) Internationale Anmeldenummer: PCT/DE2018/100212
(87) Internationale Veröffentlichungsnummer: WO 2018/162007

(56) Entgegenhaltungen:
- EP-A1- 2 395 368
- US-A- 5 682 225
- US-A- 6 091 487
- US-A1- 2016 041 266

## Beschreibung

### TECHNISCHES GEBIET

Verschiedene Beispiele der Erfindung betreffen ein LIDAR-System mit einem Laserscanner, der eingerichtet ist, um Laserpulse in mehrere Winkelbereiche auszusenden. Das LIDAR-System umfasst auch eine Steuerung, die eingerichtet ist, um basierend auf einer LIDAR-Messung mindestens einen Scanparameter des Laserscanners zu verändern.

### HINTERGRUND

Die Entfernungsmessung von Objekten ist in verschiedenen Technologiefeldern erstrebenswert. Zum Beispiel kann es im Zusammenhang mit Anwendungen des autonomen Fahrens erstrebenswert sein, Objekte im Umfeld von Fahrzeugen zu erkennen und insbesondere eine Entfernung zu den Objekten zu ermitteln.

Eine Technik zur Entfernungsmessung von Objekten ist die sogenannte LIDAR-Technologie (engl. Light detection and ranging; manchmal auch LADAR). Dabei wird gepulstes Laserlicht von einem Emitter ausgesendet. Die Objekte im Umfeld reflektieren das Laserlicht. Diese Reflektionen können anschließend gemessen werden. Durch Bestimmung der Laufzeit des Laserlichts kann ein Abstand zu den Objekten bestimmt werden.

Um die Objekte im Umfeld ortsaufgelöst zu erkennen, kann es möglich sein, das Laserlicht zu scannen. Je nach Abstrahlwinkel des Laserlichts können dadurch unterschiedliche Objekte im Umfeld erkannt werden. Zum Scannen können Laserscanner eingesetzt werden. Die Laserscanner können beispielsweise mechanisch betrieben werden, siehe z.B. US 5006721 A oder US 8446571 B2. Es sind auch Festkörper-basierte Laserscanner basierend auf konstruktiver bzw. destruktiver Interferenz von Licht bekannt, siehe zum Beispiel US 20160049765 A1.

In manchen Anwendungsfällen werden LIDAR-Techniken in Fahrzeugen, beispielsweise Personenkraftfahrzeugen, eingesetzt. Damit können zum Beispiel Techniken des autonomen Fahrens implementiert werden. Im Allgemeinen sind verschiedene Fahrerassistenzfunktionalitäten basierend auf LIDAR-Daten mit Abstands- bzw. Tiefeninformation denkbar. Z.B. können Objekte in den entsprechenden LIDAR-Bildern erkannt werden.

Solche vorbestimmten Techniken weisen bestimmte Einschränkungen und Nachteile auf. Oftmals kann es erforderlich sein, bestimmte Erfordernisse in Bezug auf die Augensicherheit zu gewährleisten. Dies muss geschehen, um Personen im Umfeld nicht zu gefährden. Außerdem kann es manchmal erforderlich sein, bestimmte physikalische Begrenzungen von verwendeten Laserlichtquellen zu berücksichtigen. Beispielsweise kann eine bestimmte Repetitionsrate einzuhalten sein, um eine Beschädigung der Laserlichtquelle durch Erhitzung zu vermeiden.

Bei den bekannten Techniken kann oftmals eine Abwägung in Bezug auf Repetitionsrate und Augensicherheit getroffen werden. Dies kann in manchen Beispielen die Leistungsfähigkeit des LIDAR-Systems, zum Beispiel in Bezug auf Auflösung oder Reichweite, beschränken.

EP 2 395 368 A1 offenbart einen entfernungsmessenden Laserscanner in einem Überwachungsbereich mit einem Lichtsender zum Aussenden von Lichtpulsen. Die Entfernung eines Objekts wird aus einer Laufzeit eines Lichtpulses bestimmt. Der Lichtsender wird derart angesteuert, dass für eine Entfernungsbestimmung mehrere Lichtpulse unterschiedlicher Intensität ausgesendet werden.

US 2016/041266 A1 offenbart ein Anpassen der Intensität von ausgehenden Lichtstrahlen, um an eine Zielreichweite angepasst zu sein. Die Intensitäten können als Funktion der Zeit angepasst werden.

US 5 682 225 A offenbart ein Verfahren und ein Gerät zum Erzeugen von schärferen und besonders genauen Ladar-Intensitätsbildern. Ein Detektor detektiert eine Magnitude eines erzeugten Laserstrahls. Diese Magnitude wird verwendet um die Magnitude von empfangenen Reflektionen einzustellen.

US 6 091 487 A offenbart einen Laser Transmitter mit einer Laserdetektionsmodul einem optischen System und einer Steuereinheit. Das Laserdetektionsmodul ist eingerichtet, um ein Signal betreffend einen reflektierten Laserstrahl zu erzeugen.

### KURZE BESCHREIBUNG DER ERFINDUNG

Deshalb besteht ein Bedarf für verbesserte Techniken zur Entfernungsmessung mittels LIDAR-Systemen. Insbesondere besteht ein Bedarf für solche Techniken, die zumindest einige der oben genannten Nachteile oder Einschränkungen beheben.

Diese Aufgabe wird von den Merkmalen der unabhängigen Patentansprüche gelöst. Die Merkmale der abhängigen Patentansprüche definieren Ausführungsformen.

Ein LIDAR-System gemäß Anspruch 1 umfasst insbesondere einen Laserscanner mit mindestens einer Laserlichtquelle. Der Laserscanner ist eingerichtet, um Laserpulse in mehrere Winkelbereiche auszusenden. Das LIDAR-System umfasst auch eine Steuerung. Die Steuerung ist eingerichtet, um die mindestens eine Laserlichtquelle zum Aussenden mindestens eines ersten Laserpulses in einen bestimmten Winkelbereich aus den mehreren Winkelbereichen anzusteuern. Die Steuerung ist weiterhin eingerichtet, um eine LIDAR-Messung basierend auf einer Reflektion des mindestens einen ersten Laserpulses durchzuführen. Die Steuerung ist weiterhin eingerichtet, um basierend auf der LIDAR-Messung des mindestens einen ersten Laserpulses mindestens einen Scanparameter des Laserscanners zu verändern und um anschließend wahlweise die mindestens eine Laserlichtquelle zum Aussenden mindestens eines zweiten Laserpulses in den bestimmten Winkelbereich anzusteuern.

Der mindestens eine erste Laserpuls kann also als Testpuls (englisch probe pulse) bezeichnet werden, weil es auf Grundlage von Information, die aus der Reflektion des mindestens einen ersten Laserpulses gewonnen wird, möglich sein kann, ein oder mehrere Scanparameter des Laserscanners zu verändern bzw. anzupassen.

Mittels solcher Techniken kann eine flexible Anpassung des Scannens des Umfelds ermöglicht werden. Insbesondere kann dadurch eine Abwägung zwischen unterschiedlichen Zielgrößen, wie beispielsweise technischen Begrenzungen der mindestens einen Laserlichtquelle - etwa in Bezug auf Repetitionsrate, Tastgrad, Pulsleistung, Betriebstemperatur, etc.-, Augensicherheit und Reichweite flexibel einzustellen.

Mittels der hierein beschriebenen Techniken ist es insbesondere möglich, a-priori Wissen über den bestimmten Winkelbereich mittels der LIDAR-Messung selbst zu sammeln. Insbesondere kann derart besonders schnell eine Veränderung des mindestens einen Scanparameters erfolgen, z.B. im Vergleich zu komplexeren Techniken die auf der Sensorfusion mit anderen Typen von Sensoren basieren.

Dabei können in den verschiedenen hierin beschriebenen Beispielen unterschiedlichste Scanparameter verändert werden. Der mindestens eine Scanparameter umfasst eine Stärke der Laserpulse. Weitere Beispiele umfassen eine Repetitionsrate der Laserpulse und eine Winkelgeschwindigkeit, mit welcher der Laserscanner Laserpulsen in unterschiedliche Winkel der mehreren Winkelbereich aussendet. Beispielsweise könnte die Stärke die Laserpulse durch eine Amplitude oder Leistung der Laserpulse eingestellt werden. Es wäre auch möglich, die Stärke der Laserpulse durch eine Dauer der Pulse einzustellen. Die Winkelgeschwindigkeit kann mit einer Scangeschwindigkeit korrelieren. Die Repetitionsrate kann über eine Scangeschwindigkeit mit der Winkelgeschwindigkeit zusammenhängen. Es wären aber auch andere Scanparameter denkbar, beispielsweise die Geometrie einer Überlagerungsfiguren des Scannens in einer ersten und zweiten Scanachse.

Ferner ist es in den unterschiedlichen hierin beschriebenen Beispielen möglich, verschiedene Arten und Typen von LIDAR-Messungen im Zusammenhang mit dem Verändern des mindestens einen Scanparameters zu berücksichtigen. In einer einfachen Implementierung kann die LIDAR-Messung eine Intensität oder Laufzeit der Reflektion des mindestens einen ersten Laserpulses betreffen. Dann kann beispielsweise eine Entfernung eines Umfeldobjekts abgeschätzt werden. Beispielsweise wäre es möglich, für größere (kleinere) Entfernungen von Umfeldobjekten, die basierend auf der Intensität bzw. Laufzeit der Reflektion des mindestens einen Laserpulses bestimmt wurden, eine größere (kleinere) Stärke für den mindestens einen zweiten Laserpuls zu wählen. Solche Techniken können auf der Erkenntnis beruhen, dass es bei Umfeldobjekten in einer kleinen Entfernung erstrebenswert sein kann, die Stärke des mindestens einen zweiten Laserpulses zu begrenzen, um die Augensicherheit zu gewährleisten. Entsprechend könnte auch die Winkelgeschwindigkeit erhöht werden, sodass weniger Laserpulse pro Raumwinkel vorahnden sind. Andererseits kann es bei Umfeldobjekten in einer größeren Entfernung erstrebenswert sein, eine größere Stärke des mindestens einen zweiten Laserpulses zu wählen, um auch weit entfernte Umfeldobjekte genau zu vermessen. Beispielsweise wäre es möglich, dass die Steuerung eingerichtet ist, um die Stärke des mindestens einen zweiten Laserpulses im Bereich von einer oder mehrerer Größenordnungen zu vergrößern.

Wenn beispielsweise auf Grundlage der LIDAR-Messung der Reflektion des mindestens einen ersten Laserpulses bereits genügend Information über das entsprechende Umfeldobjekte gesammelt wurde, kann es gänzlich entbehrlich sein den zweiten Laserpulses auszusenden. Dann kann die Stärke des mindestens einen zweiten Laserpulses gleich 0 % der Stärke des mindestens einen ersten Laserpulses gewählt werden.

Ein Verfahren gemäß Patentanspruch 9 umfasst insbesondere das Ansteuern mindestens einer Laserlichtquelle eines Laserscanners zum Aussenden mindestens eines ersten Laserpulses in einen bestimmten Winkelbereich aus mehreren Winkelbereichen. Das Verfahren umfasst auch das Durchführen einer LIDAR-Messung basierend auf einer Reflektion des mindestens einen ersten Laserpulses. Das Verfahren umfasst auch das Verändern mindestens eines Scanparameters des Laserscanners basierend auf der LIDAR-Messung. Das Verfahren umfasst auch das wahlweise Ansteuern der mindestens einen Laserlichtquelle zum Aussenden mindestens eines zweiten Laserpulses in den bestimmten Winkelbereich.

Die obenstehend beschriebenen Beispiele und Techniken können in weiteren Beispielen auch miteinander kombiniert werden.

### KURZE BESCHREIBUNG DER FIGUREN

FIG. 1 illustriert schematisch ein LIDAR-System mit einem Laserscanner und einer Steuerung gemäß verschiedener Beispiele.
FIG. 2 illustriert schematisch den Laserscanner in größerem Detail und gemäß verschiedener Beispiele.
FIG. 3 ist ein Flussdiagramm eines beispielhaften Verfahrens.
FIG. 4 illustriert Winkelbereiche, in welche der Laserscanner Laserpulse gemäß verschiedener Beispiele aussenden kann.
FIG. 5 illustriert schematisch das Verändern einer Anordnung von Winkeln, unter welchen der Laserscanner Laserpulse aussendet, basierend auf einer LIDAR-Messung gemäß verschiedener Beispiele.
FIG. 6 illustriert schematisch das Verändern einer Anordnung von Winkeln unter welchen der Laserscanner Laserpulse aussendet, basierend auf einer LIDAR-Messung gemäß verschiedener Beispiele.
FIGs. 7-9 illustrieren schematisch das Verändern einer Stärke von Laserpulsen basierend auf einer LIDAR-Messung gemäß verschiedener Beispiele.
FIG. 10 illustriert schematisch das Verändern einer Winkelgeschwindigkeit, mit welcher der Laserscanner das Umfeld scannt, gemäß verschiedener Beispiele.
FIG. 11 illustriert schematisch einen Zeitabstand gemäß verschiedener Beispiele zwischen Laserpulsen, die gemäß unterschiedlicher Scanparameter ausgesendet wurden.
FIG. 12 illustriert schematisch einen Zeitabstand gemäß verschiedener Beispiele zwischen Laserpulsen, die gemäß unterschiedlicher Scanparameter ausgesendet wurden.
FIG. 13 illustriert schematisch einen Zeitabstand gemäß verschiedener Beispiele zwischen Laserpulsen, die gemäß unterschiedlicher Scanparameter ausgesendet wurden.
FIG. 14 ist ein Flussdiagramm eines beispielshaften Verfahrens.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden verschiedene Techniken zum Scannen von Laserlicht beschrieben. Die nachfolgend beschriebenen Techniken können zum Beispiel das eindimensionale oder zweidimensionale Scannen von Laserlicht ermöglichen. Das Scannen kann das Aussenden von Laserpulsen in unterschiedliche Winkel bzw. Winkelbereiche bezeichnen. Dabei können Winkelbereich wiederholt gescannt werden. Das wiederholte Umsetzen des Scannens eines bestimmten Winkelbereichs kann eine Wiederholrate des Scannens bestimmen. Die Menge der Winkelbereiche kann einen Scanbereich bzw. einen Bildbereich definieren. Das Scannen kann das wiederholte Abtasten von unterschiedlichen Scanpunkten in der Umgebung mittels der Laserpulse bezeichnen. Für jeden Scanpunkt können Messsignale ermittelt werden. Dabei kann die Reflektion eines entsprechenden Laserpulses an einem Umfeldobjekt berücksichtigt werden. Basierend auf den Messsignalen kann eine LIDAR-Messung durchgeführt werden.

Zum Beispiel kann kohärentes oder inkohärentes Laserlicht verwendet werden. Es wäre möglich, polarisiertes oder unpolarisiertes Laserlicht zu verwenden. Beispielsweise wäre es möglich, dass das Laserlicht gepulst verwendet wird. Zum Beispiel können kurze Laserpulse mit Pulslängen im Bereich von Femtosekunden oder Pikosekunden oder Nanosekunden verwendet werden. Die Maximalleistung einzelner Pulse kann im Bereich von 50 W - 150 W liegen, insbesondere für Pulslängen im Bereich von Nanosekunden. Durch Veränderung solcher Werte kann die Stärke der Laserpulse verändert werden. Beispielsweise kann eine Pulsdauer im Bereich von 0,5 - 3 Nanosekunden liegen. Das Laserlicht kann eine Wellenlänge im Bereich von 700 - 1800 nm aufweisen. Als Laserlichtquelle kann zum Beispiel eine Festkörper-Laserdiode verwendet werden. Beispielsweise könnte als Laserlichtquelle die Diode SPL PL90_3 der Firma OSRAM Opto Semiconductors GmbH, Leibnizstraße 4, D-93055 Regensburg oder eine vergleichbare Festkörper-Laserdiode verwendet werden.

In verschiedenen Beispielen ist der Scanbereich eindimensional definiert. Dies kann beispielsweise bedeuten, dass der Laserscanner das Laserlicht mittels einer Umlenkeinheit nur entlang einer einzigen Scanachse scannt. In anderen Beispielen ist der Scanbereich zweidimensional definiert. Dies kann beispielsweise bedeuten, dass der Laserscanner das Laserlicht mittels der Umlenkeinheit entlang einer ersten Scanachse und entlang einer zweiten Scanachse scannt. Die erste Scanachse und die zweite Scanachse sind dabei verschieden voneinander. Beispielsweise könnten die erste und zweite Scanachse orthogonal zueinander orientiert sein.

In manchen Beispielen kann ein zweidimensionaler Scanbereich durch eine einzige Umlenkeinheit mit zwei oder mehr Freiheitsgraden der Bewegung implementiert werden. Dies kann bedeuten, dass eine erste Bewegung der Umlenkeinheit gemäß der ersten Scanachse und eine zweite Bewegung der Umlenkeinheit gemäß der zweiten Scanachse beispielsweise durch einen Aktuator bewirkt wird, wobei die erste Bewegung und die zweite Bewegung örtlich und zeitlich überlagert sind.

In anderen Beispielen kann der zweidimensionale Scanbereich durch mehr als eine einzige Umlenkeinheit implementiert werden. Dann wäre es zum Beispiel möglich, dass für zwei Umlenkeinheit jeweils ein einziger Freiheitsgrad der Bewegung angeregt wird. Das Laserlicht kann zunächst von einer ersten Umlenkeinheit abgelenkt werden und dann von einer zweiten Umlenkeinheit abgelenkt werden. Die beiden Umlenkeinheiten können also im Strahlengang hintereinander angeordnet sein. Dies bedeutet, dass die Bewegungen der beiden Umlenkeinheit nicht örtlich überlagert sind. Zum Beispiel kann ein entsprechender Laserscanner zwei beabstandet voneinander angeordnete Spiegel oder Prismen aufweisen, die jeweils individuell verstellt werden können.

In verschiedenen Beispielen ist es möglich, dass der Laserscanner unterschiedliche Freiheitsgrade der Bewegung zum Scannen des Laserlichts resonant betreibt. Ein solcher Laserscanner wird manchmal auch als resonanter Laserscanner bezeichnet. Insbesondere kann ein resonanter Laserscanner verschieden sein von einem Laserscanner, der zumindest einen Freiheitsgrad der Bewegung schrittweise (engl. stepped) betreibt. In manchen Beispielen wäre es zum Beispiel möglich, dass eine erste Bewegung - die einer ersten Scanachse entspricht - und eine zweite Bewegung - die einer zweiten Scanachse entspricht, die verschieden von der ersten Scanachse ist - jeweils resonant bewirkt werden.

In anderen Beispielen kann auch ein Festkörper-basierte Laserscanner durch phasenkohärente Überlagerung von mehreren Lichtquellen verwendet werden.

In verschiedenen Beispielen können LIDAR-Techniken angewendet werden. Die LIDAR-Techniken können dazu genutzt werden, um eine ortsaufgelöste Entfernungsmessung von Objekten im Umfeld durchzuführen. In verschiedenen Beispielen kann die LIDAR-Technik im Zusammenhang mit einer Fahrerassistenzfunktionalität für ein Kraftfahrzeug implementiert werden. Eine den Laserscanner beinhaltende Vorrichtung kann deshalb im Kraftfahrzeug angeordnet sein. Beispielsweise könnte ein tiefenaufgelöstes LIDAR-Bild erstellt werden und an ein Fahrerassistenzsystem des Kraftfahrzeugs übergeben werden. Damit können zum Beispiel Techniken des unterstützten Fahrens oder des autonomen Fahrens implementiert werden.

Verschiedenen Beispielen liegt die Erkenntnis zugrunde, dass eine aktive Anpassung von Scanparametern des Laserscanners eine optimale Abwägung zwischen unterschiedlichen Zielkriterien, wie beispielsweise Augensicherheit, Belastung von ein oder mehreren Laserlichtquellen und Qualität eines LIDAR-Bilds ermöglichen können. Deshalb ist eine Steuerung eines LIDAR-Systems eingerichtet, um basierend auf einer LIDAR-Messung mindestens einen Scanparameter des Laserscanners zu verändern.

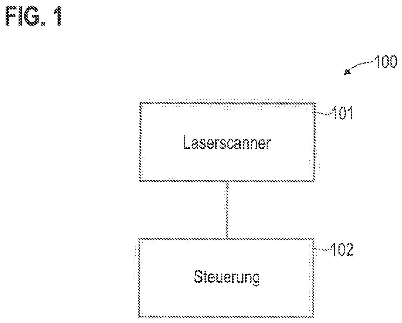

FIG. 1 illustriert Aspekte in Bezug auf ein LIDAR-System 100. Das LIDAR-System 100 umfasst einen Laserscanner 101. Der Laserscanner 101 ist eingerichtet, um Laserlicht aus einer oder mehreren Laserlichtquellen in einer Umgebung der Vorrichtung 100 abzustrahlen. Dabei ist der Laserscanner 101 eingerichtet, um das Laserlicht zumindest entlang einer Scanachse zu scannen. In manchen Beispielen ist der Laserscanner 101 eingerichtet, um das Laserlicht entlang einer ersten und einer zweiten Scanachse zu scannen. Z.B. könnte der Laserscanner 101 eine Umlenkeinheit resonant bewegen, z.B. zwischen zwei Umkehrpunkten der Bewegung. Dabei könnten z.B. ein MEMS-basierter Mikrospiegel die Umlenkeinheit implementieren. In anderen Beispielen könnte die Umlenkeinheit kontinuierlich bewegt werden, z.B. als rotierendes Prisma, etc..

Die Vorrichtung 100 umfasst auch eine Steuerung 102. Beispiele für eine Steuerung 102 umfassen einen Analogschaltkreis, eine digitale Schaltung, einen Mikroprozessor, einen FPGA und/oder einen ASIC. Die Steuerung 102 kann Logik implementieren, um den Betrieb des Laserscanners 101 mit ein oder mehreren Scanparametern zu gewährleisten.

Beispielsweise kann die Steuerung 102 den Laserscanner 101 ansteuern. Die Steuerung 102 kann beispielsweise einen oder mehrere Scanparameter des Laserscanner 101 einstellen. Beispiele für Scanparameter umfassen eine Stärke der ausgesendeten Laserpulse, eine Repetitionsrate der Laserpulse, und eine Winkelgeschwindigkeit. Beispielsweise könnte eine größere (kleinere) Winkelgeschwindigkeit einer größeren (kleineren) Geschwindigkeit der Drehbewegung eines rotierenden Prismas bezeichnen. Beispielsweise könnte eine größere (kleinere) Winkelgeschwindigkeit eine größere (kleinere) Resonanzfrequenz einer resonant betriebenen Umlenkeinheit bezeichnen.

Zum Beispiel könnten solche und andere Scanparameter in Abhängigkeit von a-prioi Wissen über ein oder mehrere Umfeldobjekte verändert werden. Zum Beispiel könnte das a-priori Wissen aus einer oder mehreren vorangegangen LIDAR-Messungen erhalten werden. Beispielsweise kann die Steuerung eingerichtet sein, um basierend auf einer LIDAR-Messung mindestens einen Scanparameter des Laserscanners zu verändern.

Dabei können unterschiedliche LIDAR-Messungen berücksichtigt werden. Die Steuerung 102 kann beispielsweise eingerichtet, um eine Abstands- bzw. Entfernungsmessung als LIDAR-Messung durchzuführen. Dazu kann die Steuerung 102 Messsignale vom Laserscanner 101 empfangen. Diese Messsignale bzw. Rohdaten können indikativ für eine Laufzeit von Pulsen des Laserlichts zwischen Senden und Empfangen sein, also eine Reflektion von Laserpulsen betreffen. Diese Messsignale können weiterhin einen assoziierten Winkelbereich des Laserlichts indizieren. Basierend darauf kann die Steuerung 102 ein LIDAR-Bild erzeugen, das beispielsweise einer Punktwolke mit Tiefeninformation entspricht. Optional wäre es möglich, dass die Steuerung 102 z.B. eine Objekterkennung basierend auf dem LIDAR-Bild als LIDAR-Messung durchführt. Beispielsweise könnten Objekte wie Fußgänger, Radfahrer, Fahrzeuge, Gebäude, Begrünung, Verkehrsschilder, etc. erkannt werden.

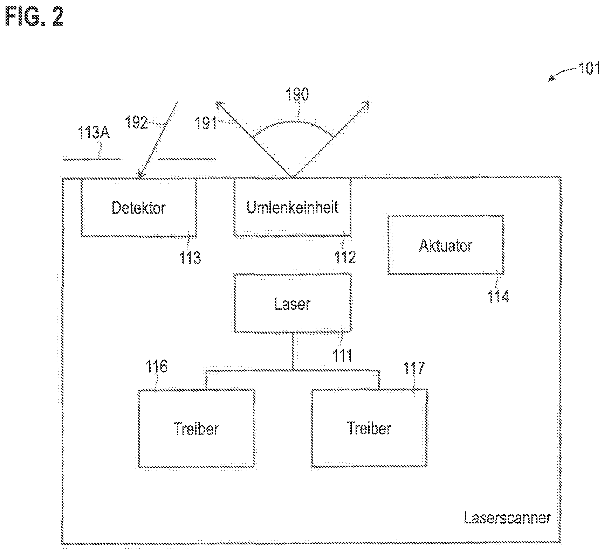

FIG. 2 illustriert Aspekte in Bezug auf den Laserscanner 101. Insbesondere illustriert FIG. 2 einen Laserscanner 101 gemäß verschiedener Beispiele in größerem Detail als FIG. 1.

In dem Beispiel der FIG. 2 umfasst der Laserscanner 101 eine Laserlichtquelle 111. Beispielsweise kann die Laserlichtquelle 111 ein Diodenlaser sein. In manchen Beispielen kann die Laserlichtquelle 111 ein Oberflächenemitter (engl. vertical-cavity surface-emitting laser; VCSEL) sein. Die Laserlichtquelle 111 sendet Laserpulse 191 aus, welche durch die Umlenkeinheit 112 um einen bestimmten Ablenkwinkel umgelenkt werden.

Die Laserlichtquelle 111 wird in dem Beispiel der FIG. 2 durch zwei Treiber 116, 117 angesteuert. Beispielsweise könnten die Treiber 116, 117 jeweils einen elektrischen Energiespeicher wie beispielsweise einer Induktivität oder eine Kapazität aufweisen. Durch Entladung des elektrischen Energiespeichers kann ein Strom-Spannung-Puls an die Laserlichtquelle 111 als Treibersignal übergeben werden, welche dann in einen Laserpuls 191 gewandelt wird. Durch das Vorsehen von zwei Treibern 116, 117 kann es möglich sein, sehr zeitnah aufeinander, beispielsweise innerhalb von wenigen 10 ns oder 100 ns solche Treibersignale bereitzustellen, nämlich von unterschiedlichen Treibern 116, 117. Insbesondere kann ein Zeitabstand zwischen aufeinanderfolgenden Laserpulse 191 dadurch kleiner sein, als eine Dauer, die für das Laden des elektrischen Energiespeichers eines einzelnen Treibers 116, 117 benötigt wird. In anderen Beispielen könnte aber auch nur ein einzelner Treiber vorhanden sein oder mehr als zwei Treiber vorhanden sein.

Die Umlenkeinheit 112 könnte z.B. einen Spiegel oder ein Prisma umfassen. Beispielsweise könnte die Umlenkeinheit 112 ein rotierendes Mehrfacetten-Prisma umfassen. Die Umlenkeinheit könnte als MEMS-basierter Mikrospiegel ausgebildet sein.

Der Laserscanner 101 kann eine oder mehrere Scanachsen implementieren (in FIG. 2 ist nur eine Scanachse dargestellt, nämlich in der Zeichenebene). Durch das Bereitstellen von mehreren Scanachsen kann ein zweidimensionaler Scanbereich implementiert werden. Zum Scannen des Laserlichts 191 weist die Umlenkeinheit 112 mindestens einen Freiheitsgrad der Bewegung auf. Jeder Freiheitsgrad der Bewegung kann eine entsprechende Scanachse definieren. Die entsprechende Bewegung kann durch einen Aktuator 114 betätigt bzw. angeregt werden.

Um mehrere Scanachsen zu implementieren, wäre es in manchen Beispielen möglich, dass mehr als eine Umlenkeinheit vorhanden ist (in FIG. 2 nicht dargestellt). Dann können die Laserpulse 191 sequenziell die verschiedenen Umlenkeinheiten durchlaufen. Jede Umlenkeinheit kann einen entsprechenden zugeordneten Freiheitsgrad der Bewegung aufweisen, der einer zugehörigen Scanachse entspricht. Manchmal wird eine solche Anordnung als Scannersystem bezeichnet.

Um mehrere Scanachsen zu implementieren, wäre es in weiteren Beispielen möglich, dass die einzelne Umlenkeinheit 112 mehr als einen einzigen Freiheitsgrad der Bewegung aufweist. Zum Beispiel könnte die Umlenkeinheit 112 mindestens zwei Freiheitsgrade der Bewegung aufweisen. Entsprechende Bewegungen können durch den Aktuator 114 angeregt werden. Z.B. kann der Aktuator 114 die entsprechenden Bewegungen individuell, aber zeitparallel oder gekoppelt anregen. Dann wäre es möglich, durch Bewirken der Bewegungen in zeitlicher und örtlicher Überlagerung zwei oder mehr Scanachsen zu implementieren. Durch das Überlagern der ersten Bewegung und der zweiten Bewegung im Ortsraum und im Zeitraum kann eine besonders hohe Integration des Laserscanners 101 erreicht werden. Dadurch kann der Laserscanner 101 mit geringem Bauraum implementiert werden. Dies ermöglicht eine flexible Positionierung des Laserscanners 101 im Kraftfahrzeug. Außerdem kann erreicht werden, dass der Laserscanner 101 vergleichsweise wenig Bauteile aufweist und damit robust und kostengünstig hergestellt werden kann. Wenn sowohl die erste Bewegung, als auch die zweite Bewegung periodisch und kontinuierlich bewirkt werden, kann eine sogenannte Überlagerungs-Figur, manchmal auch Lissajous-Figur, für das Scannen entlang der ersten Scanachse und der zweiten Scanachse erhalten werden. Die Form und Geometrie der Überlagerungs-Figur bezeichnet einen Scanparameter des Laserscanners 101.

In weiteren Beispielen wäre es auch möglich, dass mehr als eine Laserlichtquelle 111 vorhanden ist. Dann können unterschiedliche Laserlichtquelle 100 gegeneinander und in Bezug auf die Umlenkeinheit 112 angeordnet sein. Dadurch kann auch eine Auflösung entlang einer Scanachse erreicht werden.

In manchen Beispielen ist es möglich, dass zumindest die Bewegung für eine Scanachse resonant bewirkt wird. Es ist auch möglich, dass zumindest die Bewegung für eine Scanachse nicht resonant bewirkt wird, sondern vielmehr diskret bzw. gestuft bewirkt wird.

Der Aktuator 114 ist typischerweise elektrisch betreibbar. Der Aktuator 114 könnte magnetische Komponenten und/oder piezoelektrische Komponenten umfassen. Beispielsweise könnte der Aktuator eine Rotationsmagnetfeldquelle umfassen, die eingerichtet ist, um ein als Funktion der Zeit rotierendes magnetisches Feld zu erzeugen. Der Aktuator 114 könnte zum Beispiel Biegepiezokomponenten umfassen.

In manchen Beispielen könnte anstatt einer Umlenkeinheit 112 auch ein auf einem Substratetwa Silizium - integriert gefertigtes Array aus mehreren Emitterstrukturen - beispielsweise Lichtwellenleitern - verwendet werden, wobei die mehreren Emitterstrukturen Laserlicht in einer bestimmten Phasenbeziehung aussenden. Durch Variieren der Phasenbeziehung des Laserlichts, welches durch die verschiedenen Emitterstrukturen ausgesendet wird, kann dann ein bestimmter Abstrahlwinkel durch konstruktive und destruktive Interferenz eins gestellt werden. Solche Anordnungen werden auch manchmal als optisches Array mit Phasenbeziehung (engl. optical phased array, OPA) bezeichnet. Siehe M. J. R. Heck" Highly integrated optical phased arrays: photonic integrated circuits for optical beam shaping and beam steering" in Nanophotonics (2016).

Der Laserscanner 101 umfasst auch einen Detektor 113. Beispielsweise kann der Detektor 113 durch eine Fotodiode implementiert sein. Beispielsweise kann der Detektor 113 durch ein Fotodioden-Array implementiert sein und damit mehrere Detektorelemente aufweisen. Beispielsweise kann der Detektor 113 ein oder mehrere Einzelphotonen-Lawinendioden (engl. single photon avalance diode, SPAD) aufweisen.

Der Detektor 113 ist eingerichtet, um von Objekten (in FIG. 2 nicht dargestellt) im Umfeld der Anordnung 100 erzeugte Reflektionen 192 der Laserpulse 192 zu detektieren. Basierend auf einer Laufzeitmessung zwischen dem Aussenden eines 191 durch die Laserlichtquelle 111 und dem Detektieren des reflektierten Laserpulses 192 durch den Detektor 113 kann dann eine Entfernungsmessung der Objekte durchgeführt werden. Solche Techniken könnten beispielsweise auch kombiniert werden oder ersetzt werden mit strukturierter Beleuchtung, bei der anstatt von Pulsen des Laserlichts 191 kontinuierliches Laserlicht verwendet werden kann.

In dem Beispiel der FIG. 2 weist der Detektor 113 eine eigene Blende 113A auf. In anderen Beispielen wäre es möglich, dass der Detektor 113 dieselbe Blende verwendet, die auch für das Abstrahlen des primären Laserlichts 191 verwendet wird. Dann kann eine besonders hohe Sensitivität erzielt werden.

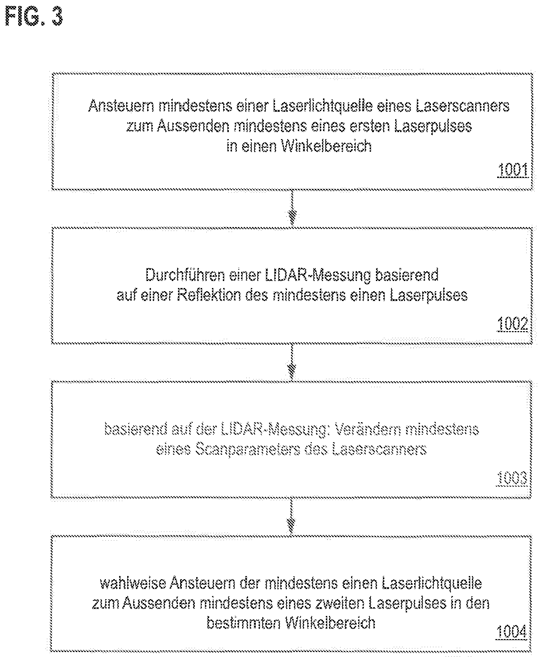

FIG. 3 ist ein Flussdiagramm eines beispielhaften Verfahrens. Zunächst wird in 1001 mindestens eine Laserlichtquelle eines Laserscanners zum Aussenden mindestens eines ersten Laserpulses in einen Winkelbereich angesteuert. Der mindestens eine Laserpuls kann als Test-Puls bezeichnet werden, der a-priori Information über Übjekte in dem Winkelbereich sammelt.

Dann wird in 1002 eine LIDAR-Messung basierend auf einer Reflektion des mindestens einen Laserpulses aus 1001 durchgeführt. Dazu können beispielsweise Messdaten aus einem Detektor ausgelesen werden.

Beispielsweise könnte die LIDAR-Messung zumindest eines von einer Intensität und einer Laufzeit der Reflektion des mindestens einen ersten Laserpulses aus 1001 betreffen. Eine Entfernungsmessung kann etwa auf Grundlage der Laufzeit durchgeführt werden. Es wäre auch möglich, komplexere Messungen durchzuführen, wie beispielsweise eine Objekterkennung.

In 1003 wird basierend auf der LIDAR-Messung aus 1002 mindestens ein Scanparameter des Laserscanners verändert. Beispielsweise könnte eine Stärke von nachfolgenden Laserpulsen verändert werden. Alternativ oder zusätzlich könnte eine Winkelgeschwindigkeit oder Scangeschwindigkeit des Laserscanners verändert werden. Alternativ oder zusätzlich könnte eine Repetitionsrate, mit der aufeinanderfolgende Laserpulse ausgesendet werden, verändert werden. Alternativ oder zusätzlich könnte eine Geometrie einer Überlagerungsfigur für einen Laserscanner mit zwei Scanachsen verändert werden.

Dann wird in 1004 die mindestens eine Laserlichtquelle wahlweise angesteuert, um mindestens einen zweiten Laserpuls in denselben Winkelbereich auszusenden, in den auch der mindestens eine Laserpuls in 1001 ausgesendet wurde. In manchen Beispielen kann auch eine Unterdrückung des Aussendens des mindestens einen zweiten Laserpulses erfolgen, sodass in 1004 die mindestens eine Laserlichtquelle nicht angesteuert wird. Das Unterdrücken des Aussendens des mindestens einen zweiten Laserpulses kann dem Setzen der Stärke des mindestens einen zweiten Laserpulses auf 0 % der Stärke des mindestens einen ersten Laserpulses entsprechen.

In manchen Beispielen können für das Aussenden des mindestens einen ersten Laserpulses in 1001 und das Aussenden des mindestens einen zweiten Laserpulses in 1004 unterschiedliche Lasertreiber zum Bereitstellen eines entsprechenden Treibersignals verwendet werden. Dadurch kann erreicht werden, dass ein Zeitabstand zwischen dem mindestens einen ersten Laserpuls und dem mindestens einen zweiten Laserpuls, d. h. 1001 und 1004, besonders gering dimensioniert werden kann, beispielsweise nicht größer als 500 ns, optional nicht größer als 200 ns, weiter optional nicht größer als 150 ns.

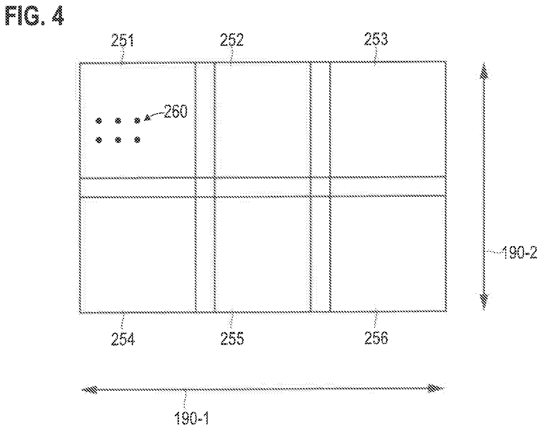

FIG. 4 illustriert Aspekte in Bezug auf unterschiedliche Winkelbereiche 251-256. In dem Beispiel der FIG. 4 sind die Winkelbereiche 251-256 überlappend angeordnet. In anderen Beispielen könnten die Winkelbereiche 251-256 auch ohne Überlappung angeordnet sein. Die Menge der Winkelbereichen 251-256 definiert Scanbereiche 190-1, 190-2: in dem Beispiel der FIG. 4 ist zweidimensionales Scannen dargestellt.

Durch die Berücksichtigung von Winkelbereiche 251-256 kann erreicht werden, dass a-priori Wissen für einen bestimmten Winkelbereiche 251-256 für nachfolgend in diesen bestimmten Scanbereich 251-256 ausgesendete Pulse berücksichtigt wird. Dadurch können auch für komplizierte vermessene Szenen, beispielsweise mit vielen unterschiedlichen Objekten bzw. Objekten in unterschiedlichen Entfernungen, optimale Scanparameter für unterschiedliche Winkelbereiche 251-256 gewählt werden.

In FIG. 4 sind außerdem beispielhaft für den Winkelbereich 251 Scanpunkte 261 dargestellt (in den übrigen Winkelbereichen 252-256 sind aus Gründen der Einfachheit die Scanpunkte 261 weggelassen). Jeder Scanpunkt 261 entspricht dabei einem Laserpuls 291, der unter einem dem Scanpunkt 261 zugeordneten Winkel ausgesendet wurde. Die Scanpunkte 261 sind in einem gewissen Abstand zueinander angeordnet, der durch die Repetitionsrate der entsprechenden Laserpulse und die Winkelgeschwindigkeit des Laserscanners definiert ist. Eine größere Dichte von Scanpunkten 261 kann eine höhere Auflösung eines entsprechenden LIDAR-Bilds bewirken; andererseits kann die Laserenergie pro Raumwinkel zunehmen, was die Augensicherheit beeinflussen kann. Außerdem kann eine größere Repetitionsrate zu einer Erhitzung der Laserlichtquelle 111 führen.

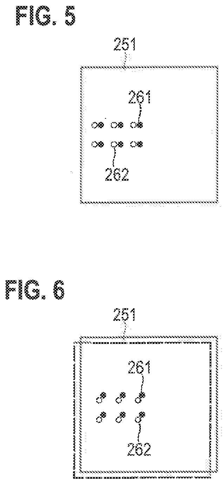

FIG. 5 illustriert Aspekte in Bezug auf eine Veränderung der Anordnung der Scanpunkte 261, 262. In dem Beispiel der FIG. 5 ist ersichtlich, dass die Scanpunkte 262 gegenüber den Scanpunkten 261 versetzt angeordnet sind. Dies könnte beispielsweise auf Odometrieinformationen basieren, die eine Positionsveränderungen des LIDAR-Systems 100 indizieren. Um diese Positionsveränderung zu kompensieren, kann der Versatz der Scanpunkte 261, 162 vorgesehen sein.

In den verschiedenen hierin beschriebenen Beispielen werden ein oder mehrere Scanparameter des Laserscanners 101 angepasst. Damit die Laserpulse 191 nach der Anpassung in den richtigen Winkelbereich bzw. unter den richtigen Winkeln ausgesendet werden, kann eine entsprechende Kompensation aufgrund der Eigenbewegung des LIDAR-Systems hilfreich sein.

FIG. 6 illustriert Aspekte in Bezug auf eine Veränderung der Anordnung der Scanpunkte 261, 262. Dabei entspricht das Beispiel der FIG. 5 grundsätzlich dem Beispiel der FIG. 6. In dem Beispiel der FIG. 6 wird jedoch der Scanbereich 251 verschoben, sodass die relative Anordnung der Scanpunkte 261, 262 in Bezug auf den jeweiligen Scanbereich 251 erhalten bleibt.

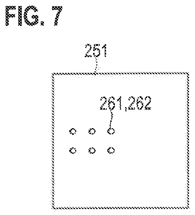

FIG. 7 illustriert Aspekte in Bezug auf eine Veränderung von Scanparametern des Laserscanners 101. FIG. 7 illustriert wiederum die Scanpunkte 261, 262. Dabei erfolgt das Aussenden der Laserpulse 191 für die Scanpunkte 261 mit einem ersten Satz von Scanparametern und das Aussenden der Laserpulse 191 für die Scanpunkte 262 mit einem zweiten Satz von Scanparametern, der zumindest teilweise verschieden ist von dem ersten Satz von Scanparametern.

Aus FIG. 7 ist ersichtlich, dass die Anordnung der Scanpunkte 261, 162 erhalten bleibt. In manchen Beispielen wäre es möglich, dass eine Veränderung der Anordnung beispielsweise auf Grundlage von Odometrieinformationen erfolgt (in FIG. 7 nicht dargestellt).

In FIG. 7 könnte beispielsweise eine Winkelgeschwindigkeit mit welcher der Laserscanner 101 die Laserpulse 191 in die unterschiedlichen Winkel, die den Scanpunkten 261, 262 entsprechen, verändert werden. Dies bedeutet, dass die Zeit zwischen dem Erfassen der Messdaten für die Scanpunkte 261 verschieden ist von der Zeit zwischen dem Erfassen der Messdaten für die Scanpunkte 262. Gleichzeitig bleibt aber eine Auflösung des entsprechenden LIDAR-Bilds erhalten. Dadurch könnte die Erwärmung der Laserlichtquelle 111 pro Zeiteinheit gesenkt werden. Ein solches Szenario kann beispielsweise für vergleichsweise statische Objekte - die z.B. durch eine Objekterkennung klassifiziert wurden - etwa Gebäude, Begrünung, Verkehrszeichen, etc. erstrebenswert sein.

Ein weiterer Scanparameter der alternativ oder zusätzlich verändert werden könnte ist die Stärke der verschiedenen Laserpulse 191.

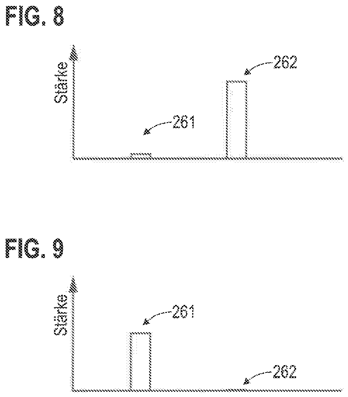

FIG. 8 illustriert Aspekte in Bezug auf das Verändern der Stärke der Laserpulse 191. Dabei ist die Stärke der Laserpulse für die Scanpunkte 261 in dem Beispiel der FIG. 8 wesentlich geringer als die Stärke der Laserpulse für die Scanpunkte 262. Beispielsweise könnte die Stärke der Laserpulse 191 für die Scanpunkte 262 um nicht weniger als einen Faktor 5 größer sein als die Stärke der Laserpulse 191 für die Scanpunkte 261, optional um nicht weniger als einen Faktor 10, weiter optional um nicht weniger als einen Faktor 100. Beispielsweise könnten die Laserpulse für die Scanpunkte 261 dieselbe Amplitude aufweisen, wie die Laserpulse für die Scanpunkte 262, beispielsweise eine Amplitude von nicht weniger als 50 Watt, optional nicht weniger als 70 Watt, weiter optional nicht weniger als 90 Watt. Dafür könnte aber die Zeitdauer der Laserpulse für die Scanpunkte 262 deutlich länger sein, als die Zeitdauer der Laserpulse für die Scanpunkte 261. Beispielsweise könnte eine solche Technik dann erstrebenswert sein, wenn auf Grundlage der Reflektionen 192 für die Scanpunkte 261 festgestellt wird, dass innerhalb eines nahen Umfeldbereichs in Bezug auf das LIDAR-System 100 keine Objekte und/oder keine stark reflektierenden Objekte vorhanden sind. Dann kann eine größere Stärke für die Laserpulse 191 für die Scanpunkte 262 gewählt werden, da eine Augensicherheit auch mit der größeren Stärke gewährleistet werden kann.

FIG. 9 illustriert Aspekte in Bezug auf das Verändern der Stärke der Laserpulse 191. Dabei ist die Stärke der Laserpulse für die Scanpunkte 261 in dem Beispiel der FIG. 9 wesentlich größer als die Stärke der Laserpulse für die Scanpunkte 262. Beispielsweise könnte die Stärke der Laserpulse für die Scanpunkte 262 gleich null sein, d. h. es wäre möglich, dass keine Laserpulse 191 für die Scanpunkte 262 ausgesendet werden. Dies kann beispielsweise dann erstrebenswert sein, wenn bereits auf Grundlage der Scanpunkte 261 genügen Information vorhanden ist, sodass ein erneutes Aussenden von Laserpulse 191 für die Scanpunkte 262 nicht erfolgen muss.

Im Allgemeinen kann die Steuerung 102 eingerichtet sein, um die Stärke der Laserpulse 191 für die Scanpunkte 262 im Bereich von 0 % bis 500 % der Stärke der Laserpulse 191 für die Scanpunkte 261 zu verändern.

Der Laserscanner 101 kann dabei eingerichtet ist, um die Stärke der Laserpulses 191 mittels eines elektrischen Treibersignals für mindestens einen Lasertreiber 116, 117 des Laserscanners und/oder mittels eines optischen Dämpfungsglied im Strahlengang der Laserpulse einzustellen. Beispielsweise könnte ein teilreflektiver Filter elektrisch oder mechanisch an steuerbar im Strahlengang positioniert sein.

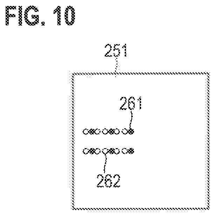

FIG. 10 illustriert Aspekte in Bezug auf das Verändern einer Scanauflösung, mit welcher der Laserscanner 101 Laserpulse 191 in unterschiedliche Winkel der mehreren Winkelbereich aussendet. In dem Beispiel der FIG. 10 ist ein Abstand zwischen aufeinanderfolgend erfassten und benachbarten Scanpunkten 261 größer als ein Abstand zwischen aufeinanderfolgend erfassten und benachbarten Scanpunkten 262. Dies kann beispielsweise dadurch erreicht werden, dass die Laserpulse 191, die den Scanpunkten 261 entsprechen, mit einer größeren Winkelgeschwindigkeit in unterschiedliche Winkel ausgesendet werden, als die Laserpulse 191, die den Scanpunkten 262 entsprechen. Eine Repetitionsrate könnte alternativ oder zusätzlich verändert werden. Dadurch kann eine Auflösung des LIDAR-Bilds gesteuert werden. Wiederum kann die Augensicherheit für eine größere Winkelgeschwindigkeit besonders gut gewährleistet werden.

In den verschiedenen hierin beschriebenen Beispielen kann das Verändern des mindestens einen Scanparameters auf unterschiedlichen Zeitskalen geschehen. In manchen Beispielen könnte das Verändern des mindestens einen Scanparameters auf einer Zeitskala von Millisekunden oder Sekunden erfolgen. In anderen Beispielen könnte das Verändern des mindestens einen Scanparameters auf einer Zeitskala von Nanosekunden oder Mikrosekunden erfolgen.

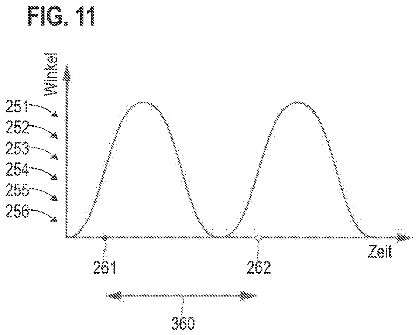

FIG. 11 illustriert Aspekte in Bezug auf eine Zeitskala des Verändern des mindestens einen Scanparameters. Insbesondere illustriert FIG. 11 einen Zeitabstand 360 zwischen einem Scanpunkt 261, der mit einem ersten Satz von Scanparametern erfasst wurde, und einem Scanpunkt 262, der mit einem zweiten Satz von Scanparametern erfasst wurde. Beide Scanpunkte 261, 262 sind in dem Winkelbereich 255 angeordnet. In dem Beispiel der FIG. 11 ist eine Position der Umlenkeinheit, die den unterschiedlichen Winkelbereichen 251-256 entsprechen, als Funktion der Zeit dargestellt. Aus FIG. 11 ist ersichtlich, dass die Umlenkeinheit periodisch und kontinuierlich bewegt wird. Es kann also einer resonanter Laserscanner 101 implementiert werden. In dem Beispiel der FIG. 11 ist der Zeitabstand 360 gleich der Periodendauer der Bewegung der Umlenkeinheit. Es könnten auch größere Zeitabstände 360, beispielsweise größer als zwei Periodendauern oder größer als zehn Periodendauern implementiert werden. Typische Scanfrequenzen liegen oftmals im Bereich von 100 Hz oder 1 kHz. Deshalb könnte ein typischer Zeitabstand 360 dem Beispiel der FIG. 11 beispielsweise im Bereich von 1 bis 10 ms liegen. Es wären auch Scanfrequenzen im Bereich von 5 kHz - 10 kHz denkbar, sodass Zeitabstände 360 im Bereich von > 100 µs denkbar wären.

Zwischen den Scanpunkten 261, 262 könnten in dem Beispiel LIDAR-Messungen für weitere Scanpunkte durchgeführt werden.

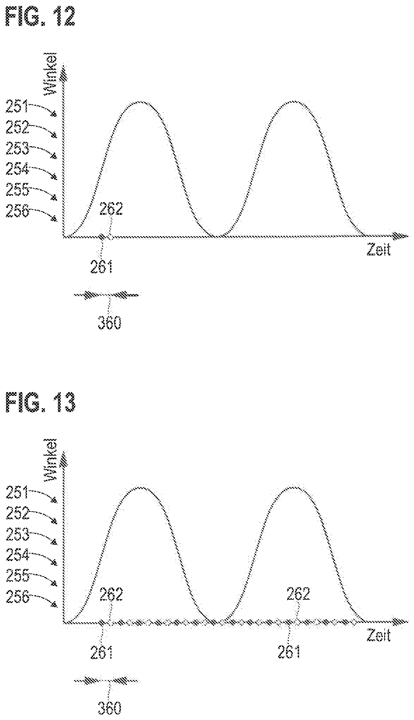

FIG. 12 illustriert Aspekte in Bezug auf einer Zeitskala des Verändern des mindestens einen Scanparameters. Das Beispiel der FIG. 12 entspricht grundsätzlich dem Beispiel der FIG. 11. In dem Beispiel der FIG. 12 ist jedoch der Zeitabstand 360 zwischen den Scanpunkten 261, 262 wesentlich geringer, nämlich insbesondere geringer als 1/100 der Periodendauer der Bewegung der Umlenkeinheit. Im Allgemeinen wäre es möglich, dass der Zeitabstand 360 nicht größer als 1/1000 der Periodendauer der Bewegung der Umlenkeinheit ist, optional nicht größer als 1/10.000, weiter optional nicht größer als 1/100.000. Beispielsweise könnten die LIDAR-Messungen für den Scanpunkte 261, 262 unmittelbar aufeinanderfolgend, d.h. ohne weitere zwischengeschobene Scanpunkte, durchgeführt werden.

Für solche besonders kurzen Zeitabstände zwischen Laserpulsen 191, die mit veränderten Scanparametern ausgesendet werden, kann es erstrebenswert sein, besonders einfache LIDAR-Messungen, beispielsweise auf Grundlage der Intensität oder der Laufzeit, durchzuführen. Die Intensität der Reflektivität kann - bei gleichbleibender Laufzeit - eine Aussage über die Reflektivität eines Zielobjekts bereitstellen. Außerdem kann es erstrebenswert sein, mehrere Lasertreiber 116, 117 vorzusehen, sodass Laserpulse 191 besonders zeitnah aufeinanderfolgend ausgesendet werden können.

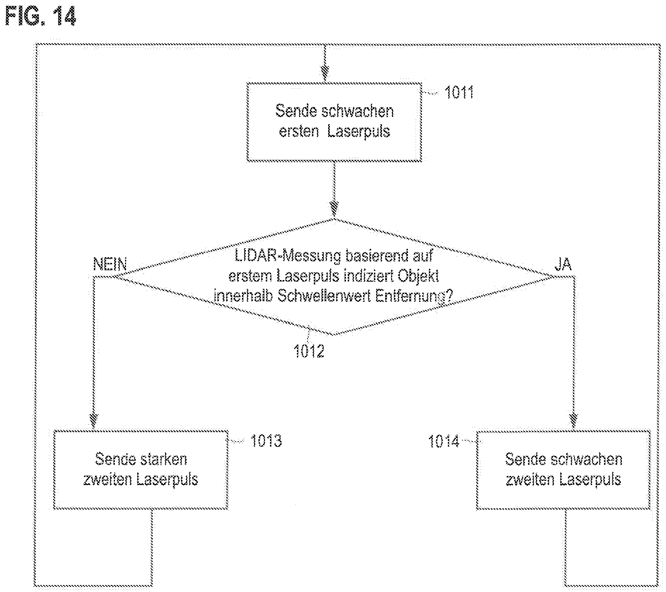

In manchen Beispielen wäre es möglich, dass für ein oder mehrere LIDAR-Bilder zumindest für etwa 10 %, optional für mindestens 50 %, weiter optional für alle ersten Laserpulse auch ein zugehöriger zweiter Laserpuls mit veränderten Scanparametern - z.B. unterschiedlicher Stärke - vorhanden ist. Beispielsweise wäre es möglich, dass für ein oder mehrere LIDAR-Bilder immer abwechselnd ein erster Laserpuls und ein zweiter Laserpuls ausgesendet wird. Derart kann für jeden zweiten Laserpuls ein zugehöriger erster Laserpuls als Test-Puls vorhanden sein. Eine solche Implementierung ist in FIGs. 13 und 14 gezeigt. Derart könnte beispielsweise mit einem ersten Laserpuls geringe Stärke überprüft werden (1011, 1012), ob sich ein Objekt im nahen Umfeld befindet; je nachdem, wie diese Überprüfung ausgeht, wird ein nachfolgender zweiter Laserpuls mit großer Stärke (1013) oder geringer Stärke (1014) ausgesendet. Dabei kann auch der zweite Laserpuls in 1013 stärker ausgebildet sein, als der erste Laserpuls in 1011. In manchen Beispielen könnte das Aussenden eines zweiten Laserpulses mit geringer Stärke in 1014 auch entfallen, wenn z.B. bereits aus der LIDAR-Messung auf Grundlage des entsprechenden ersten Laserpulses genügen Information vorhanden ist. Es ist also möglich, dass die Steuerung 102 eingerichtet ist, um für jeden ersten Laserpuls 191 bzw. jeden Scanpunkt 261 mittels der entsprechenden LIDAR-Messung zu überprüfen, ob sich im entsprechenden Winkelbereich 251-256 ein Objekt im Nahbereich des LIDAR-Systems 100 befindet. Dann kann die Steuerung 102 weiterhin eingerichtet sein, um die mindestens eine Laserlichtquelle 101 basierend auf dem Überprüfen zum Aussenden eines entsprechenden zweiten Laserpulses 191 bzw. zum Erfassen eines entsprechenden Scanpunkts 262 wahlweise anzusteuern. Beispielsweise könnte ein Nahbereich als eine Entfernung von weniger als 80 m definiert sein, oder als eine Entfernung von weniger als 50 m, oder als eine Entfernung von weniger als 20 m.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

## Patentansprüche

1. LIDAR-System (100), das umfasst:
- einen Laserscanner (101) mit mindestens einer Laserlichtquelle (111) und der eingerichtet ist, um Laserpulse (191) in mehrere Winkelbereiche (251-256) auszusenden, und
- eine Steuerung (102), die eingerichtet ist, um die mindestens eine Laserlichtquelle (111) zum Aussenden mindestens eines ersten Laserpulses (191) in einen bestimmten Winkelbereich (251-256) aus den mehreren Winkelbereichen (251-256) anzusteuern und um eine LIDAR-Messung basierend auf einer Reflektion des mindestens einen ersten Laserpulses (191) durchzuführen,
wobei die Steuerung (102) weiterhin eingerichtet ist, um basierend auf der LIDAR-Messung mindestens einen Scanparameter des Laserscanners (101) zu verändern und um anschließend die mindestens eine Laserlichtquelle (111) wahlweise zum Aussenden mindestens eines zweiten Laserpulses (191) in den bestimmten Winkelbereich (251-256) anzusteuern,
wobei der mindestens eine Scanparameter eine Stärke der Laserpulse (191) umfasst,
wobei der Laserscanner (101) eine kontinuierlich und periodisch bewegte Umlenkeinheit umfasst,
wobei ein Zeitabstand zwischen einem letzten Laserpuls des mindestens einen ersten Laserpulses (191) und einem ersten Laserpuls des mindestens einen zweiten Laserpulses (191) nicht größer als 1/1.000 einer Periodendauer der Bewegung der Umlenkeinheit ist, optional nicht größer als 1/10.000, weiter optional nicht größer als 1/100.000,
wobei die Steuerung (102) eingerichtet ist, um die Stärke des mindestens einen zweiten Laserpulses (191) gegenüber einer Stärke des mindestens einen ersten Laserpulses (191) basierend auf der LIDAR-Messung zu verändern,
wobei die Stärke des mindestens einen zweiten Laserpulses (191) um nicht weniger als einen Faktor 5 größer ist als die Stärke des mindestens einen ersten Laserpulses (191), optional um nicht weniger als einen Faktor 10, weiter optional um nicht weniger als einen Faktor 100,
wobei die Steuerung (102) eingerichtet ist, um für jeden ersten Laserpuls (191) des mindestens einen ersten Laserpulses (191) mittels der entsprechenden LIDAR-Messung zu überprüfen, ob sich im entsprechenden Winkelbereich (251-256) ein Objekt im Nahbereich des LIDAR-Systems (100) befindet,
wobei die Steuerung (102) weiterhin eingerichtet ist, um die mindestens eine Laserlichtquelle (101) basierend auf dem Überprüfen, ob sich im entsprechenden Winkelbereich (251-256) ein Objekt im Nahbereich des LIDAR-Systems (100) befindet, zum Aussenden eines entsprechenden zweiten Laserpulses des mindestens einen zweiten Laserpulses (191) wahlweise anzusteuern,
wobei die Steuerung (102) weiterhin eingerichtet ist, um die mindestens eine Laserlichtquelle (101) nur dann zum Aussenden des entsprechenden zweiten Laserpulses des mindestens einen zweiten Laserpulses anzusteuern, wenn sich kein Objekt im Nahbereich des LIDAR-Systems (100) befindet.

2. LIDAR-System (100) nach Anspruch 1,
wobei die LIDAR-Messung zumindest eines von einer Intensität und einer Laufzeit der Reflektion des mindestens einen ersten Laserpulses (191) bestimmt,
wobei die Steuerung (102) eingerichtet ist, um die Stärke des mindestens einen zweiten Laserpulses (191) basierend auf dem zumindest einem von der Intensität und der Laufzeit der Reflektion des mindestens einen ersten Laserpulses (191) zu bestimmen.

3. LIDAR-System (100) nach Anspruch 1 oder 2,
wobei der Laserscanner (101) einen ersten Lasertreiber (116, 117) mit einem ersten Speicher für elektrische Energie und einen zweiten Lasertreiber (116, 117) mit einem zweiten Speicher für elektrische Energie umfasst,
wobei die Steuerung (102) eingerichtet ist, um den ersten Lasertreiber (116, 117) zum Aussenden des mindestens einen ersten Laserpulses (191) anzusteuern und um den zweiten Lasertreiber (116, 117) zum Aussenden des mindestens einen zweiten Laserpulses (191) anzusteuern.

4. LIDAR-System (100) nach Anspruch 3,
wobei der Zeitabstand zwischen einem letzten Laserpuls des mindestens einen ersten Laserpulses (191) und einem ersten Laserpuls des mindestens einen zweiten Laserpulses (191) kleiner ist, als eine Dauer, die für das Laden des elektrischen Energiespeichers des ersten Lastertreibers (116, 117) benötigt wird.

5. LIDAR-System (100) nach einem der voranstehenden Ansprüche,
wobei der mindestens eine Scanparameter weiterhin umfasst: eine Repetitionsrate der Laserpulse (191).

6. LIDAR-System (100) nach einem der voranstehenden Ansprüche,
wobei der mindestens eine Scanparameter weiterhin umfasst: eine Geometrie einer Überlagerungsfigur des Scannens in einer ersten Scanachse und des Scannens in einer zweiten Scanachse.

7. LIDAR-System (100) nach einem der voranstehenden Ansprüche,
wobei der mindestens eine Scanparameter weiterhin umfasst: eine Winkelgeschwindigkeit mit welcher der Laserscanner (101) Laserpulse (191) in unterschiedliche Winkel der mehreren Winkelbereiche (251-256) aussendet.

8. LIDAR-System (100) nach einem der voranstehenden Ansprüche,
wobei mindestens ein erster Winkel des bestimmten Winkelbereichs (251-256) unter welchem der mindestens eine erste Laserpuls ausgesendet wird zumindest teilweise verschieden ist von mindestens einem zweiten Winkel des bestimmten Winkelbereichs (251-256), unter welchem der mindestens eine zweite Laserpuls ausgesendet wird,
wobei die Steuerung (102) eingerichtet ist, um eine Anordnung des mindestens einen zweiten Winkels in Bezug auf den mindestens einen ersten Winkel basierend auf Odometrieinformation für das LIDAR-System (100) zu bestimmen.

9. Verfahren, das umfasst:
- Ansteuern mindestens einer Laserlichtquelle (111) eines Laserscanners (101) zum Aussenden mindestens eines ersten Laserpulses (191) in einen bestimmten Winkelbereich (251-256) aus mehreren Winkelbereichen (251-256),
- Durchführen einer LIDAR-Messung basierend auf einer Reflektion des mindestens einen ersten Laserpulses (191),
- basierend auf der LIDAR-Messung: Verändern mindestens eines Scanparameters des Laserscanners (101), und
- wahlweise Ansteuern der mindestens einen Laserlichtquelle (111) zum Aussenden mindestens eines zweiten Laserpulses (191) in den bestimmten Winkelbereich (251-256),
wobei der mindestens eine Scanparameter eine Stärke der Laserpulse (191) umfasst,
wobei der Laserscanner (101) eine kontinuierlich und periodisch bewegte Umlenkeinheit umfasst,
wobei ein Zeitabstand zwischen einem letzten Laserpuls des mindestens einen ersten Laserpulses (191) und einem ersten Laserpuls des mindestens einen zweiten Laserpulses (191) nicht größer als 1/1.000 einer Periodendauer der Bewegung der Umlenkeinheit ist, optional nicht größer als 1/10.000, weiter optional nicht größer als 1/100.000,
wobei die Stärke des mindestens einen zweiten Laserpulses (191) gegenüber einer Stärke des mindestens einen ersten Laserpulses (191) basierend auf der LIDAR-Messung verändert wird,
wobei die Stärke des mindestens einen zweiten Laserpulses (191) um nicht weniger als einen Faktor 5 größer ist als die Stärke des mindestens einen ersten Laserpulses (191), optional um nicht weniger als einen Faktor 10, weiter optional um nicht weniger als einen Faktor 100,
wobei für jeden ersten Laserpuls (191) des mindestens einen ersten Laserpulses (191) mittels der entsprechenden LIDAR-Messung überprüft wird, ob sich im entsprechenden Winkelbereich (251-256) ein Objekt im Nahbereich des LIDAR-Systems (100) befindet,
wobei die mindestens eine Laserlichtquelle (101) basierend auf dem Überprüfen, ob sich im entsprechenden Winkelbereich (251-256) ein Objekt im Nahbereich des LIDAR-Systems (100) befindet, zum Aussenden eines entsprechenden zweiten Laserpulses des mindestens einen zweiten Laserpulses (191) wahlweise angesteuert wird,
wobei mindestens eine Laserlichtquelle (101) nur dann zum Aussenden des entsprechenden zweiten Laserpulses des mindestens einen zweiten Laserpulses angesteuert wird, wenn sich kein Objekt im Nahbereich des LIDAR-Systems (100) befindet.

## Claims

1. LIDAR system (100), which comprises:
- a laser scanner (101) having at least one laser light source (111) and designed to emit laser pulses (191) into multiple angular regions (251-256),
- a controller (102), which is designed to actuate the at least one laser light source (111) in order to emit at least one first laser pulse (191) into a specific angular region (251-256) from the several angular regions (251-256) and to carry out a LIDAR measurement on the basis of a reflection of the at least one first laser pulse (191),
wherein the controller (102) is additionally designed to change at least one scan parameter of the laser scanner (101) on the basis of the LIDAR measurement and to then actuate the at least one laser light source (111) in order to emit selectively at least one second laser pulse (191) into the specific angular region (251-256),
wherein the at least one scan parameter comprises a strength of the laser pulses (191),
wherein the laser scanner (101) comprises a continuously and periodically moved deflection unit,
wherein a time interval between a last laser pulse of the at least one first laser pulse (191) and a first laser pulse of the at least one second laser pulse (191) is not greater than 1/1,000 of a period duration of the movement of the deflection unit, optionally not greater than 1/10,000, further optionally not greater than 1/100,000,
wherein the controller (102) is designed to change the strength of the at least one second laser pulse (191) compared to a strength of the at least one first laser pulse (191) on the basis of the LIDAR measurement,
wherein the strength of the at least one second laser pulse (191) is greater by no less than a factor of 5 than the strength of the at least one first laser pulse (191), optionally by no less than a factor of 10, further optionally by no less than a factor of 100,
wherein the controller (102) is designed to check by means of the corresponding LIDAR measurement, for each first laser pulse (191) of the at least one first laser pulse (191), whether there is an object located in the vicinity of the LIDAR system (100) in the corresponding angular region (251-256),
wherein the controller (102) is further designed to selectively actuate the at least one laser light source (101), on the basis of the check as to whether there is an object located in the vicinity of the LIDAR system (100) in the corresponding angular region (251-256), in order to emit a corresponding second laser pulse of the at least one second laser pulse (191),
wherein the controller (102) is further designed to actuate the at least one laser light source (101) in order to emit the corresponding second laser pulse of the at least one second laser pulse only when there is no object located in the vicinity of the LIDAR system (100).

2. LIDAR system (100) according to claim 1,
wherein the LIDAR measurement determines at least one of an intensity and a transit time of the reflection of the at least one first laser pulse (191),
wherein the controller (102) is designed to determine the strength of the at least one second laser pulse (191) on the basis of the at least one of the intensity and the transit time of the reflection of the at least one first laser pulse (191).

3. LIDAR system (100) according to claim 1 or 2,
wherein the laser scanner (101) comprises a first laser driver (116, 117) with a first store for electrical energy and a second laser driver (116, 117) with a second store for electrical energy,
wherein the controller (102) is designed to actuate the first laser driver (116, 117) in order to emit the at least one first laser pulse (191) and to actuate the second laser driver (116, 117) in order to emit the at least one second laser pulse (191).

4. LIDAR system (100) according to claim 3,
wherein the time interval between a last laser pulse of the at least one first laser pulse (191) and a first laser pulse of the at least one second laser pulse (191) is smaller than a duration required for charging the electrical energy store of the first laser driver (116, 117).

5. LIDAR system (100) according to any one of the preceding claims,
wherein the at least one scan parameter further comprises: a repetition rate of the laser pulses (191).

6. LIDAR system (100) according to any one of the preceding claims,
wherein the at least one scan parameter further comprises: a geometry of an overlay figure of the scanning in a first scan axis and the scanning in a second scan axis.

7. LIDAR system (100) according to any one of the preceding claims,
wherein the at least one scan parameter further comprises: an angular speed at which the laser scanner (101) emits laser pulses (191) into different angles of the several angular regions (251-256).

8. LIDAR system (100) according to any one of the preceding claims,
wherein at least a first angle of the specific angular region (251-256) at which the at least one first laser pulse is emitted is at least partially different from at least one second angle of the specific angular region (251-256) at which the at least one second laser pulse is emitted,
wherein the controller (102) is designed to determine an arrangement of the at least one second angle with respect to the at least one first angle on the basis of odometry information for the LIDAR system (100).

9. Method, which comprises:
- actuating the at least one laser light source (111) of a laser scanner (101) in order to emit at least one first laser pulse (191) into a specific angular region (251-256) from several angular regions (251-256)
- carrying out a LIDAR measurement on the basis of a reflection of the at least one first laser pulse (191),
- on the basis of the LIDAR measurement: changing at least one scan parameter of the laser scanner (101), and
- selectively actuating the at least one laser light source (111) in order to emit at least one second laser pulse (191) into the specific angular region (251-256),
wherein the at least one scan parameter comprises a strength of the laser pulses (191),
wherein the laser scanner (101) comprises a continuously and periodically moved deflection unit,
wherein a time interval between a last laser pulse of the at least one first laser pulse (191) and a first laser pulse of the at least one second laser pulse (191) is not greater than 1/1,000 of a period duration of the movement of the deflection unit, optionally not greater than 1/10,000, further optionally not greater than 1/100,000,
wherein the strength of the at least one second laser pulse (191) is changed compared to a strength of the at least one first laser pulse (191) on the basis of the LIDAR measurement,
wherein the strength of the at least one second laser pulse (191) is greater by no less than a factor of 5 than the strength of the at least one first laser pulse (191), optionally by no less than a factor of 10, further optionally by no less than a factor of 100,
wherein for each first laser pulse (191) of the at least one first laser pulse (191), the corresponding LIDAR measurement is used to check whether an object is located in the vicinity of the LIDAR system (100) in the corresponding angular region (251-256),
wherein the at least one laser light source (101) is selectively actuated, on the basis of the check as to whether an object is located in the vicinity of the LIDAR system (100) in the corresponding angular region (251-256), in order to emit a corresponding second laser pulse of the at least one second laser pulse (191),
wherein at least one laser light source (101) is actuated in order to emit the corresponding second laser pulse of the at least one second laser pulse only when there is no object located in the vicinity of the LIDAR system (100).

## Revendications

1. Système LIDAR (100), qui comprend :
- un balayeur laser (101) avec au moins une source de lumière laser (111) et qui est configuré pour émettre des impulsions laser (191) dans plusieurs plages angulaires (251-256), et
- un dispositif de commande (102), qui est configuré pour commander au moins une source de lumière laser (111) pour l'émission d'au moins une première impulsion laser (191) dans une plage angulaire (251-256) déterminée à partir des multiples plages angulaires (251-256) et pour effectuer une mesure LIDAR sur la base d'une réflexion d'au moins une première impulsion laser (191),
dans lequel le dispositif de commande (102) est en outre configuré pour modifier au moins un paramètre d'acquisition du balayeur laser (101) sur la base de la mesure LIDAR, et pour ensuite commander à au moins une source de lumière laser (111) d'émettre sélectivement au moins une seconde impulsion laser (191) dans la plage angulaire (251-256) déterminée,
dans lequel l'au moins un paramètre de balayage comprend une épaisseur de l'impulsion laser (191),
dans lequel le balayeur laser (101) comprend une unité déflectrice à déplacement continu et périodique,
dans lequel un intervalle de temps entre une dernière impulsion laser de l'au moins une première impulsion laser (191) et une première impulsion laser de l'au moins une seconde impulsion laser (191) n'est pas supérieure à 1/1 000 d'une durée de période du mouvement de l'unité déflectrice, facultativement pas supérieure à 1/10 000, et en outre facultativement pas supérieure à 1/100 000 ;
dans lequel le dispositif de commande (102) est configurée pour modifier l'épaisseur de l'au moins une seconde impulsion laser (191) par rapport à une épaisseur de l'au moins une première impulsion laser (191) sur la base de la mesure LIDAR,
dans lequel l'épaisseur d'au moins une seconde impulsion laser (191) n'est pas inférieure d'un facteur 5 à l'épaisseur de l'au moins une première impulsion laser (191), facultativement d'un facteur 10, et en outre facultativement d'au moins un facteur 100,
dans lequel le dispositif de commande (102) est configuré pour vérifier, pour chaque première impulsion laser (191) de l'au moins une première impulsion laser (191), à l'aide de la mesure LIDAR correspondante, si un objet se trouve à proximité du système LIDAR (100) dans la plage angulaire (251-256) correspondante,
dans lequel le dispositif de commande (102) est en outre configuré pour commander l'au moins une source de lumière laser (101) sur la base de la vérification du fait qu'un objet se trouve ou non à proximité du système LIDAR (100) dans la plage angulaire (251-256) correspondante, pour l'émission d'une seconde impulsion laser correspondante de l'au moins une seconde impulsion laser (191),
dans lequel le dispositif de commande (102) est en outre configuré pour commander l'au moins une source de lumière laser (101) pour l'émission de la seconde impulsion laser correspondante de l'au moins une seconde impulsion laser uniquement si aucun objet ne se trouve à proximité du système LIDAR (100).

2. Système LIDAR (100) selon la revendication 1,
dans lequel la mesure LIDAR détermine au moins l'une d'une intensité et d'un temps de parcours de la réflexion de l'au moins une première impulsion laser (191),
dans lequel le dispositif de commande (102) est configuré pour déterminer l'intensité de l'au moins une seconde impulsion laser (191) sur la base de l'au moins une de l'intensité et du temps de parcours de la réflexion de l'au moins une première impulsion laser (191).

3. Système LIDAR (100) selon la revendication 1 ou 2,
dans lequel le balayeur laser (101) comprend un premier pilote laser (116, 117) avec un premier accumulateur pour de l'énergie électrique et un second pilote laser (116, 117) avec un second accumulateur pour de l'énergie électrique,
dans lequel le dispositif de commande (102) est configuré pour commander le premier pilote laser (116, 117) pour l'émission de l'au moins une première impulsion laser (191) et pour commander le second pilote laser (116, 117) pour l'émission de l'au moins une seconde impulsion laser (191).

4. Système LIDAR (100) selon la revendication 3,
dans lequel l'intervalle de temps entre une dernière impulsion laser de l'au moins une première impulsion laser (191) et une première impulsion laser de l'au moins une seconde impulsion laser (191) est inférieure à une durée qui est nécessaire pour le chargement de l'accumulateur d'énergie électrique du premier pilote laser (116, 117).

5. Système LIDAR (100) selon l'une quelconque des revendications précédentes,
dans lequel l'au moins un paramètre de balayage comprend en outre : un taux de répétition de l'impulsion laser (191).

6. Système LIDAR (100) selon l'une quelconque des revendications précédentes,
dans lequel l'au moins un paramètre de balayage comprend en outre : une géométrie d'une figure de superposition du balayage dans un premier axe de balayage et le balayage dans un second axe de balayage.

7. Système LIDAR (100) selon l'une quelconque des revendications précédentes,
dans lequel l'au moins un paramètre de balayage comprend en outre : une vitesse angulaire à laquelle le balayage laser (101) émet des impulsions laser (191) à différents angles des plusieurs plages angulaires (251-256).

8. Système LIDAR (100) selon l'une quelconque des revendications précédentes,
dans lequel l'au moins un premier angle de la plage angulaire (251-256) déterminée sous laquelle l'au moins une première impulsion laser est émise est au moins partiellement différent d'au moins un second angle de la plage angulaire (251-256) déterminée, sous laquelle l'au moins une seconde impulsion laser est émise,
dans lequel le dispositif de commande (102) est configuré pour déterminer un agencement de l'au moins un second angle par rapport à l'au moins un premier angle sur la base des informations d'odométrie pour le système LIDAR (100).

9. Procédé qui comprend les étapes consistant à :
- commander au moins une source de lumière laser (111) d'un balayeur laser (101) pour l'émission d'au moins une première impulsion laser (191) dans une plage angulaire (251-256) déterminée à partir de plusieurs plages angulaires (251-256),
- effectuer une mesure LIDAR sur la base d'une réflexion de l'au moins une première impulsion laser (191),
- sur la base de la mesure du LIDAR : modifier au moins un paramètre de balayage du balayeur laser (101), et
- commander sélectivement l'au moins une source de lumière laser (111) pour émettre au moins une seconde impulsion laser (191) dans la plage angulaire (251-256) déterminée,
dans lequel l'au moins un paramètre de balayage comprend une épaisseur de l'impulsion laser (191),
dans lequel le balayeur laser (101) comprend une unité déflectrice à déplacement continu et périodique,
dans lequel un intervalle de temps entre une dernière impulsion laser d'au moins une première impulsion laser (191) et une première impulsion laser d'au moins une seconde impulsion laser (191) n'est pas supérieur à 1/1 000 d'une durée de période du mouvement de l'unité déflectrice, facultativement pas supérieur à 1/10 000, et en outre facultativement pas supérieur à 1/100 000 ;
dans lequel l'épaisseur d'au moins une seconde impulsion laser (191) est modifiée par rapport à une épaisseur de l'au moins une première impulsion laser (191) sur la base de la mesure LIDAR,
dans lequel l'épaisseur de l'au moins une seconde impulsion laser (191) n'est pas inférieure d'un facteur 5 à l'épaisseur d'au moins une première impulsion laser (191), facultativement d'un facteur 10, et en outre facultativement d'au moins un facteur 100,
dans lequel, pour chaque première impulsion laser (191) de l'au moins une première impulsion laser (191), on vérifie, à l'aide de la mesure LIDAR correspondante, si un objet se trouve à proximité du système LIDAR (100) dans la plage angulaire (251-256) correspondante,
dans lequel l'au moins une source de lumière laser (101) est commandée sur la base de la vérification du fait qu'un objet se trouve ou non à proximité du système LIDAR (100) dans la plage angulaire (251-256) correspondante, pour l'émission sélective d'une seconde impulsion laser correspondante de l'au moins une seconde impulsion laser (191),
dans lequel au moins une source de lumière laser (101) est commandée pour l'émission de la seconde impulsion laser correspondante de l'au moins une seconde impulsion laser uniquement si aucun objet ne se trouve à proximité du système LIDAR (100).
